# EUROPÄISCHE PATENTSCHRIFT

(11) **EP 2 475 267 B1**
(45) Veröffentlichungstag und Bekanntmachung des Hinweises auf die Patenterteilung: **19.06.2019**
(21) Anmeldenummer: 10810742.6
(22) Anmeldetag: 11.09.2010
(51) Int. Cl.: A21D 2/26, A23J 1/14, A23L 13/20, A23L 13/40, A23L 25/00, A23L 27/00, A23L 27/14, A23L 33/105, A23L 33/185, A23L 27/10

(54) **NUTZUNG VON GESCHÄLTEN RAPSSAMEN**
UTILIZATION OF HULLED RAPE SEED
UTILISATION DE GRAINES DE COLZA DÉCORTIQUÉES

(30) Priorität: 11.09.2009 DE 102009040925; 02.03.2010 CH 276102010
(43) Veröffentlichungstag der Anmeldung: 18.07.2012
(73) Patentinhaber: Teutoburger Ölmühle GmbH & Co. KG, 49477 Ibbenbüren (DE)
(72) Erfinder: RASS, Michael, 49477 Ibbenbüren (DE); SCHEIN, Christian, 49477 Ibbenbüren (DE)
(74) Vertreter: Busse, Harald F.W.
(86) Internationale Anmeldenummer: PCT/EP2010/005575
(87) Internationale Veröffentlichungsnummer: WO 2011/029611

(56) Entgegenhaltungen:
- EP-A1- 1 074 605
- EP-A1- 2 885 980
- EP-B1- 1 513 415
- DE-A1- 10 046 769
- US-A- 4 083 836
- US-A- 4 148 789
- US-A- 4 158 656
- US-A1- 2003 072 866
- US-B1- 7 074 449
- HANNA SALMINEN ET AL: "Inhibition of protein and lipid oxidation by rapeseed, camelina and soy meal in cooked pork meat patties", EUROPEAN FOOD RESEARCH AND TECHNOLOGY ; ZEITSCHRIFT FÜR LEBENSMITTELUNTERSUCHUNG UND -FORSCHUNG A, SPRINGER, BERLIN, DE, Bd. 223, Nr. 4, 18. Januar 2006 (2006-01-18), Seiten 461-468, XP019420466, ISSN: 1438-2385, DOI: DOI:10.1007/S00217-005-0225-5

## Beschreibung

Die Erfindung betrifft ein Verfahren zur Bearbeitung von Rapssamen, wobei diese geschält und in Kerne (Parenchymgewebe und Keimwurzel) einerseits und Schalenanteile andererseits getrennt werden und wobei die Kerne einer oder mehreren Pressungen zur Ölgewinnung unterzogen werden und dabei ein feststoff- und ölhaltiger Preßkuchen verbleibt, nach dem Oberbegriff des Anspruchs 1, sowie eine Verwendung eines Preßkuchens und ein pulverförmiges Produkt nach dem Oberbegriff des Anspruchs 8.

Es ist bekannt, Rapssamen durch Pressung zur Ölgewinnung zu verwenden. Aus der EP 1 074 605 B1 ist weiter bekannt, die Rapskörner vor ihrem Pressen zu schälen und die Kern- und Schalenanteile voneinander zu trennen. Aus den hellen, gelben Kernanteilen wird dann durch Pressung Rapsöl gewonnen, das dann ebenfalls eine für Kunden angenehme, gelbliche Farbe aufweist.

Bei einer solchen Pressung stellt sich die Schwierigkeit, daß nur etwa ein Drittel des Preßguts als hochwertiges Öl anfällt und etwa zwei Drittel als feststoff- und ölhaltiger Preßkuchen verbleiben.

Es ist daher weiter bekannt, dem verbleibenden Preßkuchen wiederum im wesentlichen schwarzgraue Schalenanteile zuzuführen und die so erhaltene Mischung einem weiteren Pressen zu unterziehen, um dadurch den insgesamt gewonnenen Ölanteil zu vergrößern.

Der nach dieser weiteren Pressung noch verbleibende, feststoffhaltige Preßkuchen ist durch die wieder zugeführten Schalenanteile mit antinutriven Inhaltsstoffen von insgesamt grau-grüner Farbe und wird schon deswegen nur noch als Tierfutter oder Beimengung hierzu verwendet. Die US 4 148 789 A sowie die US 4 083 836 A zeigen jeweils ein Verfahren, bei dem ein Vermahlen der geschälten Rapssamen nur stattfindet, um anschließend eine Extraktion durchführen zu können. Das bedeutet, das Öl im Rapskuchen muss mit Waschbenzin oder einem ähnlichen Lösungsmittel herausgewaschen werden, das Lösungsmittel muss in einem separaten Verfahrensschritt anschließend wieder herausgetrieben werden. Der so der Extraktion unterworfene Rapskuchen kann anschließend nicht als Grund- oder Füllstoff für Humanlebensmittel ausgegeben werden, sondern bleibt als Abfallprodukt des eigentlichen Verfahrens (nämlich der Extraktion) nur noch als Futtermittel zur Verfügung. Die Mahlung erfolgt dabei auch nur sehr grob.

Der Erfindung liegt das Problem zugrunde, eine hochwertige Nutzung von Preßkuchen bei der Rapsverarbeitung zu erreichen. Die Erfindung löst dieses Problem durch ein Verfahren mit den Merkmalen des Anspruchs 1 sowie durch eine neue Verwendung nach Anspruch 7 und durch ein Pulver mit den Merkmalen des Anspruchs 8. Hinsichtlich weiterer Ausgestaltungen und Merkmale der Erfindung wird auf die abhängigen Ansprüche 2 bis 6 verwiesen.

Durch das erfindungsgemäße Verfahren kann nicht allein das ausgepreßte Öl als Lebensmittel verwendet werden, sondern auch ein dabei verbleibender Preßkuchen, so daß der Gesamtausnutzungsgrad der Rapssamen erheblich steigt. Dadurch, daß der Preßkuchen einem weiteren Mahlverfahren unterzogen wird, entsteht ein feines Pulver, das als Grund-, Füll- oder Zugabestoff für Humanlebensmittel geeignet ist.

Insbesondere umfaßt das weitere Mahlverfahren ein kryogenes Mahlen, so daß auch bei einem relativ hohen Restölgehalt in dem zugeführten Mahlgut ein Mahlen ohne Verkleben der am Mahlvorgang beteiligten Werkzeuge möglich ist.

Dabei werden besonders günstig als Mahlgut Anteile des Preßkuchens in gefrorener Form zugeführt, so daß die Ölanteile nicht als Flüssigkeit austreten können. Weiter ist es günstig, wenn bei diesem weiteren Mahlvorgang ein Schlagen des zugeführten Mahlguts in einer gegen Verkleben vergleichsweise unempfindlichen Stiftmühle stattfindet.

Alternativ oder zusätzlich kann das weitere Mahlverfahren eine Entölung des zugeführten Mahlguts, insbesondere durch Extraktion, umfassen, so daß auch durch diese Maßnahme der Restölgehalt im verarbeiteten Preßkuchen sinken kann und seine Verarbeitung erleichtert ist.

Da ausschließlich Kernanteile der Rapskörner ohne Zugabe von Schalenanteilen dem weiteren Mahlverfahren zugeführt und nachfolgend als Lebensmittelgrund- oder -füllstoff verwendet werden, ist sichergestellt, daß der so entstehende Stoff die helle Farbe der Kerne behält, ohne durch Schalenanteile in seiner ästhetischen Wirkung beeinträchtigt zu werden. Auch in der Schale enthaltene antinutrive Anteile wie etwa Wachse oder Polyphenole werden so aus dem gebildeten Lebensmittel ferngehalten.

Dabei wird so weit feingemahlen, daß der erhaltene Grund-, Füll- oder Zugabestoff ein Pulver mit Korngrößen von 100 µm bis 500 µm ausbildet.

Ein solches Pulver kann als Grundstoff für eine Proteinextraktion (Proteinkonzentration und/oder Proteinisolation) dienen, da aufgrund der Verminderung von Schalenanteilen die Rohfaser mit antinutriven Bestandteilen zumindest weitgehend entfernt ist und zudem in dem Pulver durch die Ölreduktion ein hoher Proteingehalt vorliegt. Die Rapsproteine enthalten dabei viele wichtige Aminosäuren. Zudem hat durch das Vermahlen - kalt oder warm - bereits ein Aufschluß stattgefunden.

Mit dem hohen Proteingehalt, dem geringen Öl- und Schaltenanteil und seiner Korngröße ist dieses Pulver gut als Grund-, Füll- oder Zugabestoff für trockene Gewürze, Gewürzmischungen oder Gewürzzubereitungen, aber auch als einrührbarer Anteil in Gewürzsoßen geeignet.

Vorteilhaft kann der entstandene Grund-, Füll- oder Zugabestoff auch in Wurstwaren eingemischt werden und deren Nährwert und Volumen vergrößern.

Je feiner das gebildete Pulver ist, desto eher kann es auch als gesunder und nährwertreicher Grund-, Füll- oder Zugabestoff in Backwaren oder auch in andere Lebensmittelmassen wie etwa Snacks, Müsliriegel o. ä. eingemischt werden. Durch eine konsequente Kaltherstellung ist eine Denaturierung der Proteine vermieden, dadurch ergeben sich auch sehr gute physikalische Eigenschaften, so daß ein solches Pulver beispielsweise auch extrudiert werden kann und so eine haftende Vernetzung für Preßlinge wie etwa Pellets, Erdnußflips oder ähnliches bilden kann.

Die Verwendung eines bei der kalten Bearbeitung ohne Erhitzen oder chemische Veränderung von Rapssamen erhaltenen und Kernanteile der Rapssamen enthaltenden Preßkuchens als Grund-, Füll- oder Zugabestoff für Humanlebensmittel ist gesondert beansprucht gemäß Anspruch 7.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: einen grobschematischen Ablaufplan eines erfindungsgemäßen Verfahrens,
- Fig. 2: eine Detailansicht von verschiedenen Verfahrensschritten aus Figur 1,
- Fig. 3: einen grobschematischen Ablaufplan eines Verfahrens, bei dem zwischen einem Kryovermahlen (nicht Bestandteil des Verfahrensanspruches) und einem sog. Warmvermahlen bei Raumtemperatur ausgewählt werden kann,
- Fig. 4: eine Detailansicht von verschiedenen Verfahrensschritten aus Figur 3.

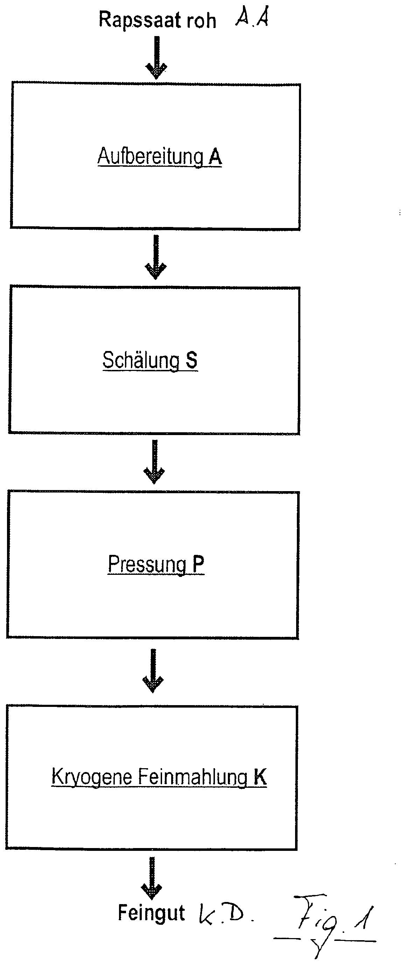

Gemäß dem in Figur 1 dargestellten Ablaufplan werden die zugeführten und noch unsortierten Rapssamen A.A - auch als Rapssaat bezeichnet - zunächst in einer Aufbereitung A derart sortiert, daß die weiter zu verarbeitenden Rapskörner A.E eine weitgehend gleiche Größe haben.

Diese werden dann in eine Einrichtung S zum Schälen eingeleitet und dadurch in eine Schalenfraktion S.G und eine Kernfraktion S.E getrennt.

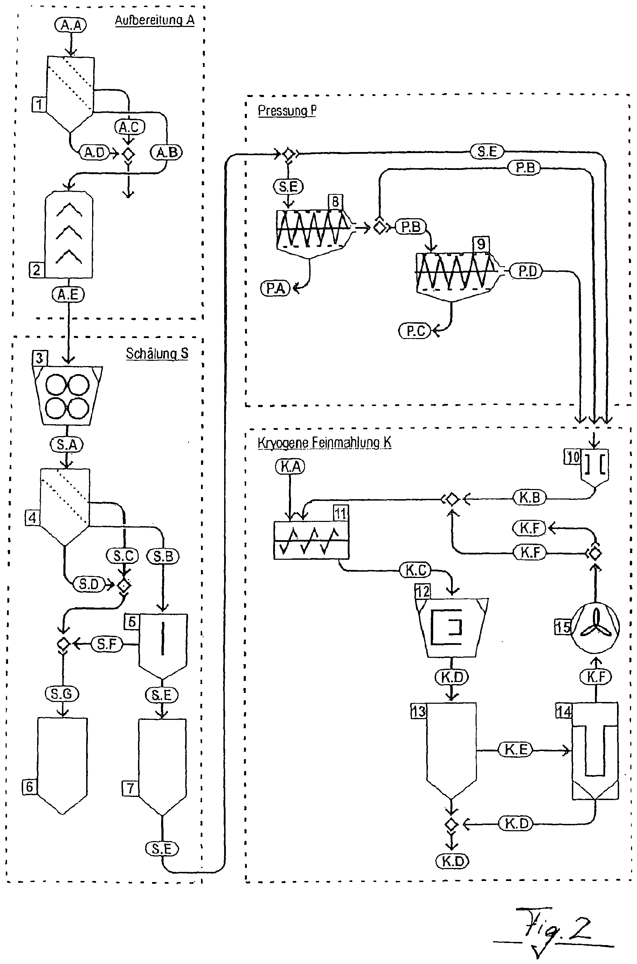

Eine Pressung der Schalen ist möglich; hier jedoch ist in Figur 2 nur die Pressung P der Kerne S.E eingezeichnet, die dann weiter einer Feinmahleinrichtung K zugeführt werden. Dabei kann sowohl einmal P.B oder mehrfach gemahlener Preßkuchen P.D dem Feinmahlen unterzogen werden. Auch ungepreßte Kerne S.E können mit in die Feinmahlung einbezogen werden.

Gemäß dem Ausführungsbeispiel nach den Figuren 1 und 2 wird ein kryogenes Mahlen durchgeführt, das mit eingefrorenem Mahlgut arbeitet, so daß der relativ hohe Restölanteil im Mahlgut K.B nicht zu einem Verschmieren oder Verkleben der Maschinen führen kann.

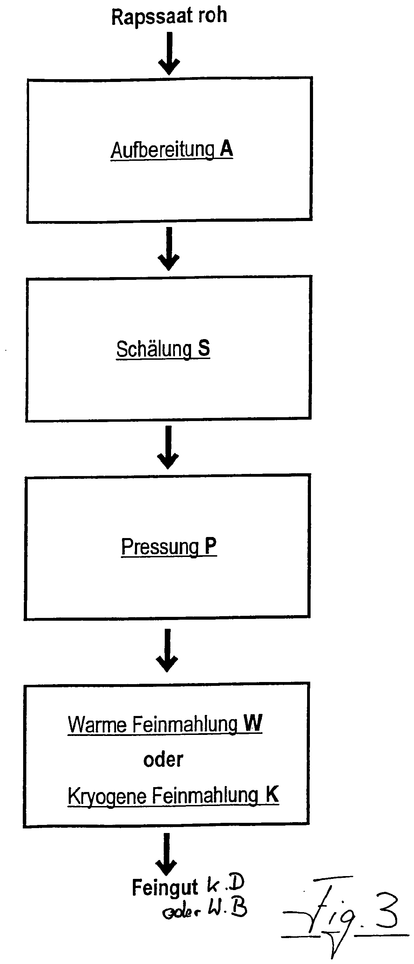

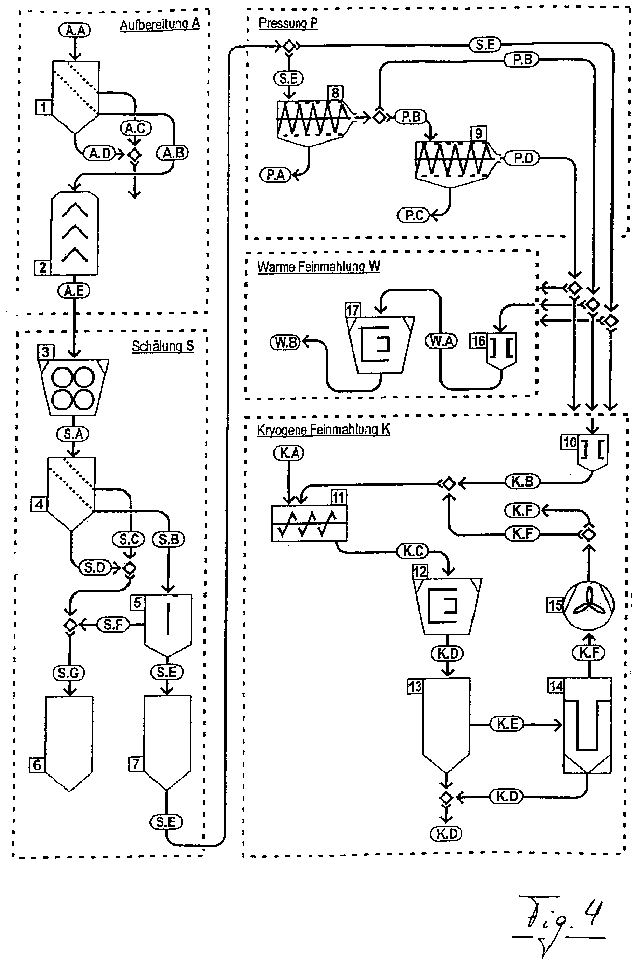

Alternativ ist in den Figuren 3 und 4 dargestellt, daß auch ein sog. Mahlverfahren des Mahlguts W.A bei Raumtemperatur unter Verzicht auf eine kostenintensive Kühlung mit flüssigem Stickstoff durchgeführt werden kann.

Auch kann u. U. ein Teil des Mahlguts K.B bzw. W.A kryogen und ein anderer warmvermahlen werden.

Als Ergebnis des Feinmahlens wird ein Feingut K.D (bzw. W.B: Figur 4) erhalten, das ein rieselfähiges Pulver mit Korngrößen von 100 µm bis 500 µm in näherungsweise einer Gauß schen Verteilung ausbildet. Aufgrund der Verwendung nur der Kerne ohne Schalen hat das Pulver K.D oder W.B eine helle Färbung. Dieses Pulver K.D kann dann direkt als oder zumindest als Grund-, Füll- oder Zugabestoff für ein Humanlebensmittel Verwendung finden.

Insbesondere kann ein so gebildetes Pulver K.D oder W.B auch als Ausgangsmaterial für ein Proteinextraktion (Proteinkonzentration und/oder Proteinisolation) dienen, da es einen sehr hohen Proteingehalt mit vielen wichtigen Aminosäuren aufweist und von störenden Rohfasern der Schale befreit ist. Antinutrive Substanzen wie etwa Chlorophyll, Tannin, Polyphenole, Phytinsäure, sind daher deutlich reduziert. Eine solche Substanz kann in der Humanernährung auch als Substitut für Senf dienen.

Damit kann auch viel Wasser gebunden werden, so daß zum Beispiel in Wurstwaren der Fleischeinsatz erheblich verringert und dennoch der ernährungsphysiologische Gehalt erhöht werden kann. Auch in aus dem Pulver K.D oder W.B gewonnenen Proteinisolaten kann eine hohe Stabilität, beispielsweise in Schäumen, erreicht werden. Diese haben daher nicht nur sehr gute ernährungsphysiologische, sondern ebenfalls sehr gute funktionale Eigenschaften, wie die angesprochene helle, angenehme Optik und die hohe mechanische Stabilität, die größer ist als die von aufgeschlagenem Tiereiweiß. Zudem können durch den Ersatz von tierischen Produkten durch das erfindungsgemäße Produkt erheblich mehr vegane Lebensmittel geschaffen und das Erfordernis von Massentierhaltung verringert werden.

Insbesondere kann das Pulver K.D oder W.B auch Grund-, Füll- oder Zugabestoffe in Gewürzen, Gewürzmischungen, Gewürzzubereitungen oder Gewürzsoßen bilden. Aufgrund seiner hellen Pulverstruktur kann das erhaltene Feingut auch gut in Gewürzstreuern für pulverförmige Gewürze als Füllstoff eingesetzt werden und dort beispielsweise Lactose oder Dextrose ersetzen. Im Gegensatz zu vielen anderen Ölsaaten hat Raps ein mild-würziges Aroma und unterstützt daher die Gewürzaromen.

Ebenso ist es möglich, das erhaltene Feingut K.D oder W.B als Grund-, Füll- oder Zugabestoff in Wurstwaren oder in andere Lebensmittelmassen einzumischen oder dieses in Backwaren zu verwenden, da es selbst, wie oben erwähnt, ein mild-würziges Aroma ohne unangenehme Schärfe hat.

Im einzelnen wird bei der Aufbereitung der zunächst unsortierten rohen Rapssaat A.A zunächst in der Siebmaschine 1 eine Reinigung der Rapssaat vorgenommen, so daß Besatz A.C und Kümmerkorn A.D aussortiert werden können und die gereinigte Rapssaat A.B in einem Saattrockner 2 getrocknet werden kann, etwa im Luftstrom.

Die so gereinigten, getrockneten und eine ungefähre Normgröße aufweisenden Rapskörner A.E werden dann der Schälung S zugeführt, wo sie zunächst in einem Doppel-Walzwerk 3 im Spalt zwischen den Walzen gebrochen werden; Der dabei entstandene Rapsbruch S.A wird einer Siebmaschine 4 zugeführt, in der Anbruch S.C und Feinbruch S.D aussortiert werden und der sog. Nutzbruch S.B weiter in einen Sichter 5 übergeleitet wird. In diesem werden die Schalen S.F aussortiert und mit dem Anbruch S.C und Feinbruch S.D insgesamt als sog. Schalenfraktion S.G einem Silo 6 zugeführt und je nach Einsatzzweck weiterverarbeitet. Diese Weiterverarbeitung kann beispielsweise ein Beimischen zu einem Preßkuchen der Kernfraktion S.E sein, die in einem parallelen Silo 7 zwischengelagert wird. Durch diese Beimischung und nochmaliges Pressen kann der Anteil an insgesamt gewonnenem Öl vergrößert werden, der Preßkuchen ist dann allerdings mit den dunklen Schalenanteilen versetzt, so daß seine optische Gestalt - und damit die Einsatzmöglichkeit als Lebensmittelrohstoff - eingeschränkt ist und er beispielsweise als Viehfutter weiterverwendet wird.

Sofern die Optik keine Rolle spielt, kann auch ein solcher Preßkuchen in der Weise, wie sie nachfolgend für die Kernfraktion S.E beschrieben ist, weiter genutzt werden:
Diese geschälte Kernfraktion S.E wird einer ein- oder mehrstufigen Preßeinheit P zugeführt. Wie in Figur 2 beispielhaft eingezeichnet ist, sind dort zwei Schneckenpressen 8, 9 vorgesehen.

In der Schneckenpresse 8 wird eine erste Pressung des geschälten Rapses S.E durchgeführt, so daß das Kernöl P.A der ersten Pressung gewonnen werden kann. Der Kernkuchen P.B der ersten Pressung kann einer zweiten Pressung in der zweiten Presse 9 unterzogen werden, so daß die Ölausbeute steigt und das Kernöl P.C zusätzlich gewonnen werden kann. Der Kernkuchen P.D der zweiten (oder einer weiteren) Pressung kann ebenso wie der Kernkuchen P.B der ersten Pressung und/oder auch ungemahlene Rapskerne S.E als einzelne Fraktion oder als Mischung aus diesen Fraktionen insgesamt der Feinmahlung K oder W zugeführt werden.

Die Feinmahlung K ist hier eine kryogene, d. h., daß das Mahlgut K.B nach Durchlaufen eines Metallabscheiders 10 in einem Kühler 11, hier einem Wirbel-Schneckenkühler, gefroren, In diesen Kühler 11 wird hier flüssiger Stickstoff K.A eingeleitet, so daß die noch im Mahlgut enthaltene Ölanteil (typisch um die 10% für die zweite und 22 % für die erste Pressung) die Mahleinrichtung nicht verschmiert oder verklebt.

Das gefrorene Mahlgut K.C wird in einer Stiftmühle 12 geschlagen und dadurch in das gewünschte Feingut K.D von feiner Körnung in der Größenordnung von 100 µm bis zu 500 µm umgewandelt und in einem Sammelbehälter 13 eingeleitet. Das Sichtgas K.E wird über einen Filter 14 und ein Gebläse 15 aus dem Feingut K.D entfernt. Der Stickstoff K.F kann in einem Kreislauf wieder zur Kühlung verwendet werden.

Das weitere Mahlverfahren muß nicht zwingend ein kryogenes Mahlvervahren umfassen, sondern kann zusätzlich oder alternativ insbesondere auch eine weitere Entölung vor der Mahlung des zugeführten Mahlguts, insbesondere durch Extraktion, umfassen.

Alternativ ist in den Figuren 3 und 4 auch ein Warmvermahlen W ohne Stickstoffkühlung dargestellt, bei dem ebenfalls eine Stiftmühle 17 zum Vermahlen des Mahlguts W.A vorgesehen ist und am Ende ebenfalls ein Pulver W.B erhalten wird.

Dadurch, daß ausschließlich Kernanteile der Rapskörner ohne Zugabe von Schalenanteilen dem weiteren Mahlverfahren zugeführt werden, bleibt auch das erhaltene Feinmahlgut K.D, W.B hellgelblich und ohne die u. U. für Lebensmittel unerwünschten und in den Schalenanteilen enthaltenen Anteile.

Mit der Erfindung ist erstmals eine Verwendung eines bei der Bearbeitung von Rapskörnern A.A erhaltenen und Kernanteile S.E der Rapskörner enthaltenden Preßkuchens P.B, P.D als Grundstoff für Humanlebensmittel gezeigt. Die Wertschöpfung aus der Rapssaat ist erheblich gesteigert, da nicht mehr nur das Öl, sondern auch der Preßkuchen als hochwertiger Stoff für die Lebensmittelproduktion genutzt wird.

Das so erhaltene Pulver K.D ist dabei in verschiedener Weise nutzbar, etwa als Grundstoff für insbesondere Gewürze, Gewürzmischungen, Gewürzzubereitungen oder Gewürzsoßen, für Wurst- oder Backwaren oder andere Lebensmittelmassen oder als Grundstoff für eine Proteinextraktion zur Schaffung sehr proteinreicher Humanlebensmittel. Ein Erhitzen oder chemisches Verändern dieses Pulvers K.D, W.B ist dabei nicht erforderlich, ebensowenig eine Impfung mit Pilzen oder anderen Zusätzen, sondern es ist direkt als Lebensmittelgrund- oder Zusatzstoff verwend bar.

Das Pulver K.D, W.B kann jedoch auch auf verschiedene Arten weiterbearbeitet werden, insbesondere auch das mit dem Pulver gebildete Lebensmittel, zum Beispiel auch erhitzt oder tiefgefroren werden.

**Bezugszeichenliste:**

| | | | |
|---|---|---|---|
| A.A | Rapssaat roh | W | Warmvermahlen, |
| A.B | Rapssaat gereinigt, | W.A | Mahlgut zum |
| A.C | Besatz, | | Warmvermahlen, |
| A.D | Kümmerkorn, | W.B | Feingut |
| A.E | Rapssaat getrocknet, | | |
| | | 1 | Siebmaschine, |
| S.A | Rapsbruch, | 2 | Saattrockner, |
| S.B | Nutzbruch, | 3 | Doppel-Walzwerk, |
| S.C | Anbruch, | 4 | Siebmaschine, |
| S.D | Feinbruch, | 5 | Sichter, |
| S.E | Schälraps, | 6 | Silo Schalen, |
| S.F | Schalen | 7 | Silo Schälraps, |
| S.G | Schalenfraktion, | 8 | Seiher-Schneckenpresse, |
| | | 9 | Seiher-Schneckenpresse, |
| P.A | Kernöl 1. Pressung, | 10 | Metall-Abscheider, |
| P.B | Kernkuchen 1. Pressung, | 11 | Wirbel-Schneckenkühler, |
| P.C | Kernöl 2. Pressung, | 12 | Stiftmühle, |
| P.D | Kernkuchen 2. Pressung, | 13 | Sammelbehälter, |
| | | 14 | Staubfilter, |
| K | Kryogenes Mahlen | 15 | Gebläse, |
| K.A | Stickstoff (flüssig), | 17 | Stiftmühle |
| K.B. | Mahlgut, | | |
| K.C | Mahlgut gefroren, | | |
| K.D | Feingut, | | |
| K.E | Sichtgas, | | |
| K.F | Stickstoff (gasförmig), | | |

## Patentansprüche

1. Verfahren zur Bearbeitung von Rapssamen (A.A), wobei diese geschält und in Kernanteile (S.E) einerseits und Schalenanteile (S.G) andererseits getrennt werden und wobei die Kernanteile (S.E) einer oder mehreren Pressungen zur Ölgewinnung (P.A;P.C) unterzogen werden und dabei ein feststoff- und ölhaltiger Preßkuchen (P.B;P.D) verbleibt, **dadurch gekennzeichnet,**
**daß** der Presskuchen (P.B;P.D) zumindest einem weiteren Mahlverfahren (W) bei Raumtemperatur unterzogen und als Grund-, Füll- oder Zugabestoff (W.B) für Humanlebensmittel ausgegeben wird, wobei ausschließlich Kernanteile (S.E) der Rapskörner (A.A) ohne Zugabe von Schalenanteilen (S.G) dem weiteren Mahlverfahren (W) zugeführt werden und wobei der Grund- oder Füllstoff ein Pulver mit der Grund- oder Füllstoff ein Pulver mit Korngrößen von 100 µm bis zu 500 µm bildet, wobei das gesamte Verfahren eine konsequente Kaltherstellung unter Vermeidung einer Denaturierung der Proteine ausbildet.

2. Verfahren nach Anspruch 1,
**dadurch gekennzeichnet,**
**daß** das weitere Mahlverfahren (W) ein Schlagen des zugeführten Mahlguts in einer Stiftmühle (12) umfaßt.

3. Verfahren nach einem der Ansprüche 1 oder 2,
**dadurch gekennzeichnet,**
**daß** der erhaltene Grund-, Füll- oder Zugabestoff (W.B) in Lebensmittelmassen eingemischt wird.

4. Verfahren nach einem der Ansprüche 1 bis 3,
**dadurch gekennzeichnet,**
**daß** der erhaltene Grund-, Füll- oder Zugabestoff (W.B) einen Anteil von Gewürzen, Gewürzmischungen, Gewürzzubereitungen oder Gewürzsoßen bildet.

5. Verfahren nach einem der Ansprüche 1 bis 4,
**dadurch gekennzeichnet,**
**daß** der erhaltene Grund-, Füll- oder Zugabestoff (W.B) in Wurstwaren eingemischt wird.

6. Verfahren nach einem der Ansprüche 1 bis 5,
**dadurch gekennzeichnet,**
**daß** der erhaltene Grund-. Füll- oder Zugabestoff (W.B) in Backwaren eingemischt wird.

7. Direkte Verwendung ohne Erhitzen oder chemische Veränderung eines bei der kalten Bearbeitung von Rapssamen (A.A) unter Vermeidung einer Denaturierung der Proteine erhaltenen und ausschließlich Kernanteile (S.E) der Rapskörner (A.A) ohne Zugabe von Schalenanteilen (S.G) der Rapssamen enthaltenden Preßkuchens als Grundstoff für Humanlebensmittel.

8. Hellgelbliches Pulver (K.D) als Grundstoff für insbesondere Gewürze, Gewürzmischungen, Gewürzzubereitungen oder Gewürzsoßen, für Wurst- oder Backwaren und/oder als Grundstoff für mit Hilfe von Proteinkonzentration und/oder Proteinisolation gebildete Lebensmittel, wobei das Pulver ausschließlich gebildet ist aus geschälten und von Schalenanteilen (S.E) getrennten sowie nachfolgend gepreßten Rapssamen und Korngrößen von 100 µm bis zu 500 µm bildet und wobei die im Pulver enthaltenen Proteine ihren nicht denaturierten Ausgangszustand aufweisen.

## Claims

1. A method for processing oilseed rape seeds (A.A), wherein these are shelled and separated into kernel parts (S.E) on the one hand and shell parts (S.G) on the other, and wherein the kernel parts (S.E) are subjected to one or a plurality of pressings for producing oil (P.A; P.C) and, thereby, a press cake containing solid mass or oil (P.B; P.D) remains, **characterized in that**
the press cake (P.B; P.D) is subjected to at least one other grinding process (W) at room temperature and is output as a base material, a filler material or an additive material (W.B) for human food, wherein only kernel parts (S.E) of the oilseed rape grains (A.A) are supplied to the other grinding process (W) without adding shell parts (S.G) and wherein the base or filler material forms a powder with a grain size of 100 µm up to 500 µm, wherein the entire method constitutes a consequent cold production, thereby avoiding a denaturing of proteins.

2. The method according to Claim 1,
**characterized in that**
the other grinding process (W) entails processing the supplied ground material in a pen mill (12) .

3. The method according to one of the Claims 1 or 2,
**characterized in that**
the obtained base, filler or additive material (W.B) is mixed into food masses.

4. The method according to one of the Claims 1 to 3,
**characterized in that**
the obtained base, filler or additive material (W.B) forms a component of seasonings, seasoning mixtures, seasoning preparations or seasoning sauces.

5. The method according to one of the Claims 1 to 4,
**characterized in that**
the obtained base, filler or additive material (W.B) is mixed into sausage products.

6. The method according to one of the Claims 1 to 5,
**characterized in that**
the obtained base, filler or additive material (W.B) is mixed into baked goods.

7. Direct use, without heating or chemical change occurring, of a pressing cake as a base material for human food, thereby containing only kernel parts (S.E) of the oilseed rape grains (A.A) without adding shell parts (S.G) of the oilseed rape seeds and having been obtained during the cold processing of oilseed rape seeds (A.A) avoiding a denaturing of the proteins.

8. Light-yellow powder (K.D) as a base material for seasonings, seasoning mixtures, seasoning preparations or seasoning sauces for sausage products or baked goods and/or as a base material for food formed with the aid of protein concentration and/or protein isolation, wherein the powder solely consists of shelled oilseed rape seeds or ones that have been separated from the shell parts (S.E), as well as those that have been subsequently pressed forming grain sizes of 100 µm up to 500 µm and wherein the proteins contained in the powder exhibit their non-denatured initial state.

## Revendications

1. Procédé de traitement de graines de colza (A.A), lors duquel ces dernières sont décortiquées et séparées en parts de graines (S.E) d'une part et en parts d'enveloppes (S.G) d'autre part, et on soumet les parts de graines (S.E) à un ou à plusieurs pressages, en vue d'une extraction d'huile (P.A ; P.C) et il reste à cet effet un (P.B ; P.D) un tourteau contenant des matières solides et de l'huile, **caractérisé en ce qu'**
on soumet le tourteau (P.B ; P.D) à au moins un procédé de broyage (W) supplémentaire à température ambiante et on le récupère sous la forme de matière première, de matière de charge ou d'additif (W.B) pour des produits alimentaires destinés à l'humain, exclusivement des parts de graines (S.E) des grains de colza (A.A) sans addition de parts d'enveloppe (S.G) étant alimentées vers le procédé de broyage (W) supplémentaire et la matière première ou matière de charge formant une poudre d'une granulométrie de 100 µm à 500 µm, l'ensemble du procédé correspond à une production à froid conséquente, en évitant toute dénaturation des protéines.

2. Procédé selon la revendication 1,
**caractérisé en ce que**
le procédé de broyage (W) supplémentaire comprend un battage du produit broyé alimenté dans un broyeur à broches (12).

3. Procédé selon l'une quelconque des revendications 1 ou 2,
**caractérisé en ce qu'**
on incorpore la matière première, la matière de charge ou l'additif (W.B) obtenu(e) à une masse de produit alimentaire.

4. Procédé selon l'une quelconque des revendications 1 à 3,
**caractérisé en ce que**
la matière première, la matière de charge ou l'additif (W.B) obtenu(e) forme une part d'épices, de mélanges d'épices, de préparations d'épices ou de sauces épicées.

5. Procédé selon l'une quelconque des revendications 1 à 4,
**caractérisé en ce qu'**
on incorpore la matière première, la matière de charge ou l'additif (W.B) obtenu(e) dans des produits de charcuterie.

6. Procédé selon l'une quelconque des revendications 1 à 5,
**caractérisé en ce qu'**
on incorpore la matière première, la matière de charge ou l'additif (W.B) obtenu(e) dans des produits de boulangerie.

7. Utilisation directe, sans modification chimique ni échauffement d'un tourteau obtenu lors du traitement à froid de graines de colza (A.A), en évitant toute dénaturation des protéines et contenant exclusivement des parts de graines (S.E) des graines de colza (A.A), sans ajout de parts d'enveloppe (S.G) des graines de colza, en tant que matière première pour des produits alimentaires destinés à l'humain.

8. Poudre jaune clair (K.D) en tant que matière première pour notamment des épices, des mélanges d'épices, des préparations d'épices ou des sauces épicées pour des produits de charcuterie ou des produits de boulangerie et/ou en tant que matière première pour des produits alimentaires créés à l'aide d'une concentration de protéines et/ou d'une isolation des protéines, la poudre étant exclusivement constituée de graines de colza décortiquées et séparées des parts d'enveloppe (S.E) et pressées par la suite et formant des granulométries de 100 µm à 500 µm et les protéines contenues dans la poudre présentant leur état initial non dénaturé.
